# EUROPEAN PATENT SPECIFICATION

(11) **EP 0 741 735 B1**
(45) Date of publication and mention of the grant of the patent: **11.08.1999**
(21) Application number: 95907386.7
(22) Date of filing: 19.01.1995
(51) Int. Cl.: C07F 7/18, C07F 7/04, C09D 143/04

(54) **REACTIVE ADDUCTS OF VINYLDIOXO COMPOUNDS**
REAKTIVE ADDUKTE VON VINYLDIOXOVERBINDUNGEN
PRODUITS D'ADDITION REACTIFS DE COMPOSES VINYLDIOXO

(30) Priority: 25.01.1994 US 186090
(43) Date of publication of application: 13.11.1996
(73) Proprietor: E.I. DU PONT DE NEMOURS AND COMPANY, Wilmington Delaware 19898 (US)
(72) Inventor: GREGOROVICH, Basil, V., Wilmington, DE 19810 (US); HAZAN, Isidor, Clementon, NJ 08021 (US); OMURA, Hisanori, Clarkston, MI48348-2884 (US)
(74) Representative: Woodcraft, David Charles
(86) International application number: US9500374
(87) International publication number: WO9519982

(56) References cited:
- EP-A- 0 410 264
- US-A- 3 291 860

## Description

### BACKGROUND OF THE INVENTION

This invention relates to reactive adducts of certain vinyldioxo compounds and to curable coating compositions comprising such reactive adducts.

Vinyldioxo compounds (also referred to herein as VDO compounds) are well known and certain members of the class have been disclosed as polyester curing agents in U.S. 3,291,860. All are cyclic acetals, extensively studied and patented by Ikeda (U.S. Patents 3,010,918; 3,010,923; 3,197,484), by Brachman(U.S. Patent 3,014,924), and by others and described in detail by Hochberg (JOCCA 48, 11, 1043-1068, 1965). The simplest compounds in this class are made by a reaction of acrolein with a compound having two hydroxyl groups, either on adjacent carbon atoms or on carbon atoms separated by an additional carbon atom. When more than two hydroxyl groups are present in a compound, different pairs of hydroxyl groups can react with the aldehyde to form a cyclic acetal. Typical compounds having at least two hydroxyl groups include, for example, ethylene glycol, glycerin, 1,2,6-hexanetriol, and trimethylolpropane. Depending on the number and type of hydroxyl groups, the resulting VDO can be either a substituted 1,3-dioxolane or a substituted 1,3-dioxane, but frequently it is a mixture of a dioxolane with a dioxane. The reaction of acrolein (1) with trimethylolpropane (2) is shown below in Equation 1. The formation of VDO compounds, like other acetal-forming reactions, is catalyzed by acids.

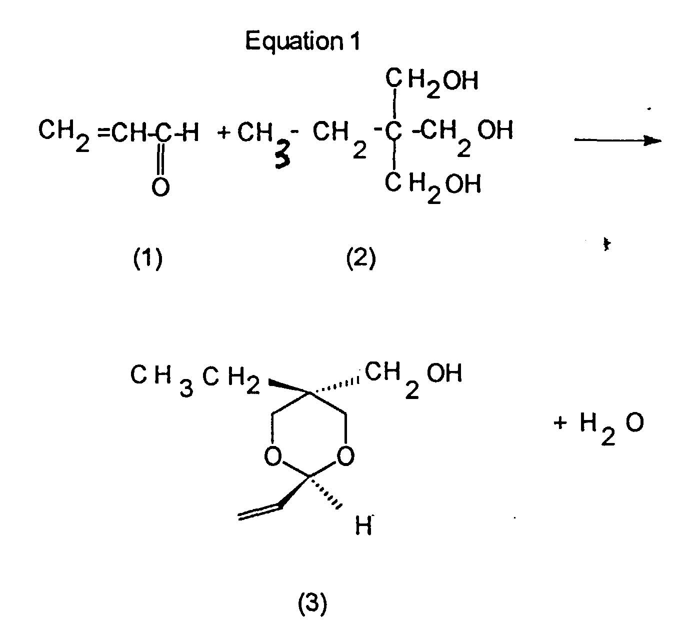

The reaction product according to formula (3) is a 2-vinyl-1,3-dioxane substituted with an ethyl group in the 4-position and with a hydroxymethyl (methylol) group in the 6-position. Analogous reactions can be used to prepare substituted rings having four to ten carbon ring members, that is, substituted dioxirane, dioxetane, dioxolane, dioxane, dioxepane, dioxocane, dioxonane, and dioxecane.

VDO compounds and their various derivatives have been described as useful polymerizable materials, which have the potential of providing both pigmented and clear-coat finishes in automotive and other applications. Those compounds polymerize in the presence of oxygen, such reactions being catalyzed by cobalt compounds. In an aqueous medium and in the presence of acids, the VDO compounds are unstable, so that further reactions are carried out in either a neutral, alkaline, or organic medium. Hochberg *(op. cit.)* discusses various syntheses and properties of many VDO compounds. In spite of the great industrial potential of VDO compounds, they have not been successfully commercialized in high performance coatings, for whatever reasons.

It has recently been found that VDO compounds can be polymerized, with ring opening, in the presence of an acid. For example, one of several reactions that take place involves the above compound of formula (3) in the following equation 2:

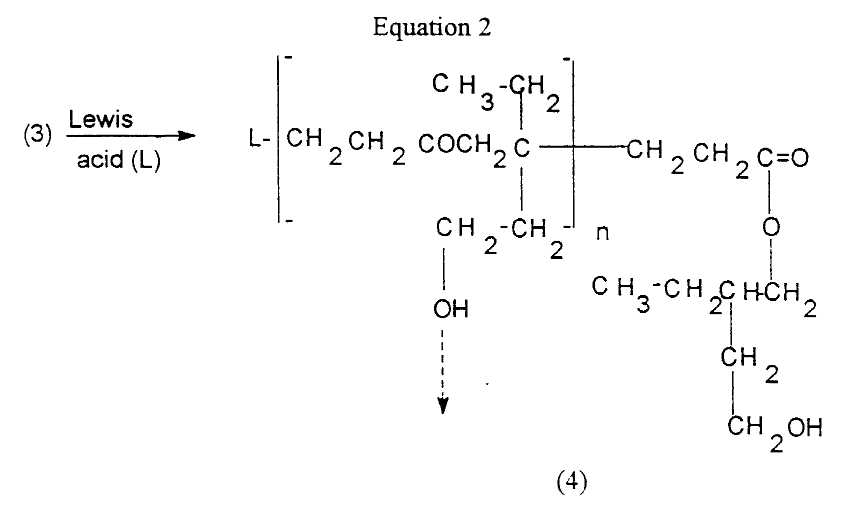

The hydroxyl group of the polymer, represented by a broken line arrow in formula (4), can be used for crosslinking by reaction with a difunctional or polyfunctional compound to form a solid coating. This is done starting with a liquid component or with two liquid components, in the absence of a solvent or with a minimum amount of a solvent or diluent.

Instead of crosslinking a polymerized VDO compound, it is also practical to form an adduct of VDO compound with a compound having two reactive groups under such conditions that only one group reacts, without crosslinking or with a minimum amount of crosslinking; so that the adduct can be polymerized in the presence of an acid, with ring opening, and then undergo a second reaction or crosslinking through the second reactive group.

### SUMMARY OF THE INVENTION

According to the present invention, there is now provided a class of adducts of vinyldioxo compounds with difunctional compounds having two reactive functional groups, at least one of those functional groups being a silyl group, most preferably a di- or trialkoxysilyl group where the alkyl groups having from 1 to 4 carbon atoms, those adducts being represented by the following generic formula (5): 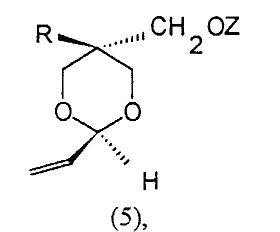 where R is a branched, unbranched, or cyclic alkyl of up to 12, preferably up to 6 carbon atoms, most preferably methyl or ethyl, and Z is a divalent radical between the oxygen on the VDO moiety and the terminal silyl group.

Also disclosed are new curable coating compositions comprising such adducts vinyldixo compounds.

### DETAILED DESCRIPTION OF THE INVENTION

New adducts of VDO compounds are disclosed and have been found useful in silane coatings. These adducts can readily be formed using a starting VDO compound made from, for example, a vinyl aldehyde and a tri-hydroxyl compound. One such example is the vinyl-substituted dioxane made from acrolein and trimethylolpropane. When the VDO compound is made from acrolein and trimethylolpropane, the R substituent in the above formula (5) will be ethyl; when it is made from acrolein and trimethylolethane, R will be methyl, etc.

The divalent radical Z in the above formula (5) is derived from a compound having two reactive groups, at least one of which groups is a silyl groups represented by Si(R₂)(R₃)(R₄), wherein R₂, R₃, and R₄ are independently alkyl, phenyl, alkyl ether, or phenyl ether, preferably at least two of R₂, R₃, and R₄ being a hydrolyzable group, more preferably two of which are alkyl ether, wherein each alkyl is independently selected from the group consisting of branched, unbranched, or cyclical hydrocarbons having up to 12 carbon atoms; most preferably methyl or ethyl. A preferred silyl group is -Si(R)(OR₅)(OR₆), where R is either CH₃, CH₃CH₂, CH₃O, or CH₃CH₂O; and R₅ and R₆ are CH₃ or CH₃CH_{2.}

Examples of the compounds which form the Z moiety when reacted with a VDO compound are 3-isocyanatopropyl trimethoxysilane (according to formula 6 below) and siloxane oligomers (according to formula 7 below).

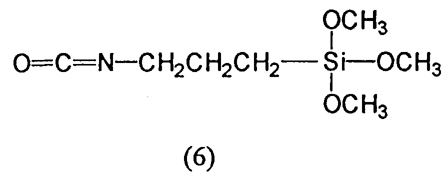

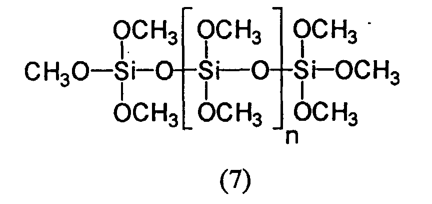

In formula 7 above, n can suitably be 0 to 50 or mixtures thereof, for example octamethoxytrisiloxane when n equals one. A commericially available mixture of such siloxane compounds is RDS-1™ (methysilicate 51) supplied by Colcoat Co., Ltd. (Tokyo, Japan). This RDS-1 product is believed to be represented by formula 7 above when n is 1 to 3.

Based on formulas 6 and 7 above, for example, the corresponding adducts from a VDO compound (for example, obtained from trimethylolpropane and acrolein) can be represented by the following respective formulas 8 and 9.

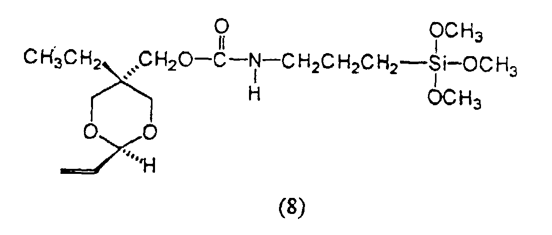

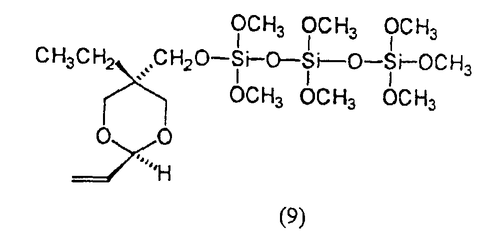

Similar compounds can be produced in which Z is the -CONH-(CH₂)ₙ-Si(OCH₃)₃ group in which n is 1 to 10, preferably 2 to 4 or in which Z is the ⁅Si(OCH₃)₂-O 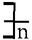 Si(OCH₃) group wherein n is 0 to 10, preferably 1 to 4.

In the cases of adducts (8) and (9), each has a trimethoxysilyl end group, which can under proper conditions undergo further reactions. For example, in an acid-catalyzed polymerization of the VDO adduct, which is accompanied by ring opening, as shown above in Equation 2, some alkoxysilyl groups are hydrolyzed and new Si-O-Si bonds can form with another adduct or with a crosslinking agent or functional polymer in a coating composition. For example, silane and/or hydroxyl groups on a polymer may crosslink with the VDO adduct.

While the reaction of the starting VDO compound with a difunctional compound having end groups possessing different reactivities, such as compound (6), above, give essentially a single adduct compound quite readily, the reaction with compound (7) will result in a mixture of adduct products, which however, is also useful for coating applications and, if fact, may have the advantage of being less expensive to produce. Ideally, both types of reactions should be conducted under anhydrous conditions because water readily splits the methoxysilyl groups. Under those conditions, the isocyanate group of compound (6) reacts preferentially with the pendant methylol group of the starting VDO compound. Compound (7) will, of course, first react with one molecule of the VDO compound through one of its identical trimethoxysilyl groups. Theoretically, the remaining trmethoxysilyl group of either compound (6) or compound (7) could then further react with a second molecule of the VDO compound. Under anhydrous conditions and at low temperature and low catalyst, this second reaction can be largely avoided, although it usually occurs to a small extent.

The VDO adducts describe above are useful as components of a curable coating composition for the purpose of lowering VOC (volatile organic compounds). Such compositions may comprise 10-80% by weight of a liquid organic carrier and 20 to 90% by weight, based on the weight of the composition, of a binder. The VDO compounds are considered to be part of the binder (solids other than pigments in the composition). The binder can suitably comprise from 5 to 50% by weight of binder of the VDO adduct, 80 to 10% by ,weight of binder of a silane functional polymer, and an effective amount of a curing catalyst. The composition may suitably comprising a crosslinking agent, for example a melamine resin, a further VDO compound (without the Z moiety), a hydroxy functional polyol acrylic polymer, and/or a non-aqueous dispersed polymer or NAD. Other crosslinking agents are epoxy, isocyanate, and carbodiimide compounds or resins.

For these and other conventional components of a coating composition, further description is to be found in U.S. patent number 5,244,696 to Hazan et al., hereby incorporated by reference in its entirety. As indicated therein, the silane-fucntional polymer may be an alkoxysilane functional acrylic polymer having a weight average molecular weight of 500 to 30,000 comprising from about 30 to 95% by weight, based on the weight of the polymer, of polymerized ethylenically unsaturated monomers which do not contain an alkoxysilane functionality and about 5 to 70% by weight of ethylenically unsaturated monomers which contain an alkoxysilane functionality. The silane-functional polymer may also have hydroxy-functional groups by copoylmerizing monomers of hydroxy-functional esters of methacrylic or acrylic acid.

This invention is now illustrated by the following representative example. All parts and percentages are by weight unless otherwise indicated.

### Example 1

This example illustrates the preparation of a VDO adduct from 3-isocyanatopropyltrimethoxysilane. The 3-isocyanatopropyltrimethoxy silane(from OSI Specialties, Inc. of Tarytown, New York), 1498.62 g, 7.3 moles, was added slowly, with good mixing, under anhydrous conditions, to a flask containing 1498.38 g, 8.7 moles; of compound (3) and 3g of DBTDL (dibutyl tin dilaurate). No solvent or diluent was used. The flask contents were heated over a period of 3 hours and 7 minutes from 21.5°C to 101.7°C. Infrared spectra of the flask contents were taken at intervals to follow the progress of the reaction. The reaction was considered complete when the isocyanate peak was no longer detectable.

The reaction product was a 100% solids material, useful as a reactive component of a silane resin-based coating system.

### Example 2

This example illustrates a coating composition comprising a VDO-6/isocyanate adduct according to the present invention. The isocyanate was 3-isocyanatopropyltrimethoxysilane. VDO-6 is another name for 2-vinyl-5-ethyl-5-hydorxymethyl-1,3-dioxane. The other components were analogous to corresponding components in U.S. Patent No.5,244,696, particularly in examples 1 to 4, hereby incorporated by reference. A coating composition was prepared by blending together the following components:

| Component | Wt. % Solids | Parts by Weight |
|---|---|---|
| Acrylic silane resin | 79.50 | 50.314 |
| NAD (non-aqueous dispersed resin) | 65.50 | 30.534 |
| VDO-6/isocyante adduct | 100.00 | 18.10 |
| Cymel™1161 melamine resin | 100.00 | 7.800 |
| Microgel rheology control agent | 70.00 | 7.429 |
| Silica rheology control dispersion | 34.20 | 8.772 |
| Resiflo™ polybutyl acrylate flow agent | 50.00 | 0.400 |
| UV screeners (blend) | 32.50 | 4.00 |
| TMOA (trimethyl orthoacetate water scavenger) | 0.00 | 3.00 |
| DDBSA* | 44.99 | 2.778 |
| Tetrabutyl phosphonium chloride | 25.00 | 0.800 |
| Dibutyl tin dilaurate | 100.00 | 0.250 |

| | | |
|---|---|---|
| *Dodecyl benzene sulfonic acid, unblocked or blocked with AMP (aminomethylpropyl). | | |

The final composition had a weight solids content of 68.97, a measured VOC of 342 Kg/m³ (2.85 lbs/gal) and a calulated VOC of 314 Kg/m³ (2.62 lbs/gal), indicating very low loss of the VDO-6 adduct. The final vicosity was 0.095 Pa/s (95 cps) (ICI).

### Example 3

This example illustrates a coating composition comprising a VDO-6/RDS-1 adduct in a 1/1 weight ratio. RDS-1(methylsilicate SI) is a commercially available mixture of siloxane compounds supplied by Colcoat Co., Inc. (Tokyo, Japan). VDO-6 is another name for 2-vinyl-5-ethyl-5-hydoxymethyl-1,3 -dioxane. The other components were analogous to corresponding components in Example 2 above. A coating composition was prepared by blending together the following components:

| Component | Wt. % Solids | Parts by Weight |
|---|---|---|
| Acrylic silane resin | 79.50 | 45.031 |
| NAD (non-aqueous dispersed resin) | 65.50 | 30.534 |
| VDO-6/RDS1 adduct | 100.00 | 18.100 |
| RDS-1 silane oligomer | 100.00 | 18.100 |
| Melamine resin | 100.00 | 7.800 |
| Microgel rheology control agent | 70.00 | 7.429 |
| Silica rheology control dispersion | 34.20 | 8.772 |
| Resillow™ polybutyl acrylate flow agent | 50.00 | 0.400 |
| UV screeners (blend) | 70.00 | 5.00 |
| DDBSA* | 44.99 | 2.223 |
| Tetrabutyl phosphonium chloride | 25.00 | 0.800 |
| Dibutyl tin dilaurate | 100.00 | 0.200 |

| | | |
|---|---|---|
| *Dodecyl benzene sulfonic acid, unblocked or blocked with AMP (aminomethylpropyl). | | |

The final composition had a weight solids content of 76.17, a calculated VOC of 248 Kg/m³ (2.07 lbs/gal) and a final vicosity was 0.095 Pa/s (95 cps) (ICI). The composition exhibited good application properties and appearance.

### Example 4

This example illustrates a coating composition comprising a VDO-6/RDS-1 adduct in a 2/1 weight ratio. RDS-1 is (methylsilicate SI) is a commercially available mixture of siloxane compounds supplied by Colcoat Co., Inc. (Tokyo, Japan). VDO-6 is another name for 2-vinyl-5-ethyl-5-hydorxymethyl-1,3-dioxane. The other components were analogous to corresponding components in Example 2 above. A coating composition was prepared by blending together the following components:

| Component | Wt. % Solids | Parts by Weight |
|---|---|---|
| Acrylic silane resin | 79.50 | 50.314 |
| NAD (non-aqueous dispersed resin) | 65.50 | 30.534 |
| VDO-6/RDS1 adduct | 100.00 | 18.100 |
| Melamine resin | 100.00 | 7.800 |
| Microgel rheology control agent | 70.00 | 7.429 |
| Silica rheology control dispersion | 34.20 | 8.772 |
| Resiflow™ polybutyl acrylate flow agent | 50.00 | 0.400 |
| UV screeners (blend) | 32.50 | 12.308 |
| DDBSA* | 44.99 | 2.223 |
| Tetrabutyl phosphonium chloride | 25.00 | 0.800 |
| Dibutyl tin dilaurate | 100.00 | 0.250 |
| Methanol | 0.00 | 2.778 |

| | | |
|---|---|---|
| *Dodecyl benzene sulfonic acid, unblocked or blocked with AMP (aminomethylpropyl). | | |

The final composition had a weight solids content of 68.97, a calculated VOC of 315 Kg/m³ (2.63 lbs/gal) and a final vicosity was 0.095 Pa/s (95 cps) (ICI). This VDO-6/silicate 2/1 adduct is less volatile than the 1/1 addduct of the previous example.

## Claims

1. A compound which is an adduct of a vinyldioxo compound with a difunctional compound having two reactive functional groups, at least one of those functional groups being a silyl group, the adduct being represented by the following generic formula: 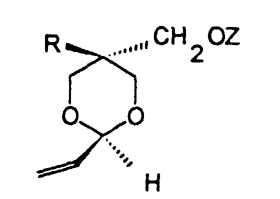 wherein R is a branched, unbranched, or cyclic alkyl having up to 12 carbon atoms and Z is a divalent radical terminated by a silyl group.

2. The compound of claim 1 wherein R is methyl or ethyl.

3. The compound of claim 1 wherein the silyl group is Si(R₂)(R₃)(R₄), wherein R₂, R₃, and R₄ are independently alkyl, phenyl, alkyl ether, or phenyl ether, at least two of R₂, R₃, and R₄ being a hydrolyzable group

4. The compound of claim 3 wherein two of R₂, R₃, and R₄ are alkyl ether, wherein each alkyl is independently selected from the group consisting of branched, unbranched, or cyclical hydrocarbons having up to 12 carbon atoms.

5. The compound of claim 1 wherein Z is the -CONH-(CH₂)ₙ-Si(OCH₃)₃ group wherein n is 1 to 10, or ⁅Si(OCH₃)₂-O 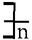 Si(OCH₃)₃ wherein is 0 to 10.

6. A curable coating composition comprising 10 to 80% by weight of a liquid organic carrier and 20 to 90% by weight, based on the weight of the composition, of a binder wherein the binder comprises:
a) from 5 to 50% by weight of binder of an adduct according to Claim 1;
b) 80 to 10% by weight of binder of a silane functional polymer; and
c) an effective amount of a curing catalyst.

7. The composition of claim 6 wherein the silyl group is Si(R₂)(R₃)(R₄), wherein R₂, R₃, and R₄ are independently alkyl, phenyl, alkyl ether, or phenyl ether, at least two of R₂, R₃, and R₄ being a hydrolyzable group.

8. The composition of claim 6 wherein Z is the -CO-NH-(CH₂)ₙ-Si(OCH₃)₃ group wherein n is 1 to 10, or ⁅Si(OCH₃)₂-O 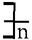 Si(OCH₃)₃ wherein n is 0 to 10.

9. The composition of claim 6 wherein the silane-functional polymer is an alkoxysilane functional acrylic polymer having a weight average molecular weight of 500 to 30,000 comprising about 30 to 95% by weight, based on the the weight of the polymer, of polymerized ethylenically unsaturated monomers which do not contain an alkoxysilane functionality and about 5 to 70% by weight of ethylenically unsaturated monomers which contain an alkoxysilane functionality.

## Patentansprüche

1. Verbindung, bei der es sich um ein Addukt einer Vinyldioxo-Verbindung mit einer difunktionellen Verbindung mit zwei reaktiven funktionellen Gruppen handelt, wobei mindestens eine dieser funktionellen Gruppen eine Silylgruppe ist, wobei das Addukt dargestellt wird durch die folgende allgemeine Formel: 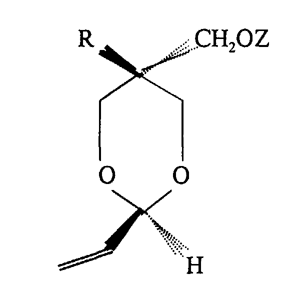 worin R für verzweigtes, unverzweigtes oder zyklisches Alkyl mit bis zu 12 Kohlenstoffatomen steht und Z ein von einer Silylgruppe abgeschlossener zweiwertiger Rest ist.

2. Verbindung nach Anspruch 1, worin R Methyl oder Ethyl ist.

3. Verbindung nach Anspruch 1, in welcher die Silylgruppe Si(R₂)(R₃)(R₄) ist, wobei R₂, R₃ und R₄ unabhängig für Alkyl, Phenyl, Alkylether oder Phenylether stehen und mindestens zwei von R₂, R₃ und R₄ eine hydrolysierbare Gruppe darstellen.

4. Verbindung nach Anspruch 3, in welcher zwei von R₂, R₃ und R₄ Alkylether darstellen, wobei jedes Alkyl unabhängig aus der aus verzweigten, unverzweigten oder zyklischen Kohlenwasserstoffen mit bis zu 12 Kohlenstoffatomen bestehenden Gruppe ausgewählt ist.

5. Verbindung nach Anspruch 1, in welcher Z die Gruppe -CONH-(CH₂)ₙ-Si(OCH₃)₃, worin n 1 bis 10 ist, oder
-[Si(OCH₃)₂-O]ₙ-Si(OCH₃)₃, worin n 0 bis 10 ist, darstellt.

6. Härtbare Beschichtungszusammensetzung, umfassend 10 bis 80 Gewichtsprozent eines flüssigen organischen Trägers und 20 bis 90 Gewichtsprozent, bezogen auf das Gewicht der Zusammensetzung, eines Bindemittels, wobei das Bindemittel umfaßt:
(a) 5 bis 50 Gewichtsprozent Bindemittel eines Addukts nach Anspruch 1;
(b) 80 bis 10 Gewichtsprozent Bindemittel eines Silan-funktionellen Polymers; und
(c) eine wirksame Menge eines Härtungskatalysators.

7. Zusammensetzung nach Anspruch 6, in welcher die Silylgruppe Si(R₂)(R₃)(R₄) ist, wobei R₂, R₃ und R₄ unabhängig für Alkyl, Phenyl, Alkylether oder Phenylether stehen und mindestens zwei von R₂, R₃ und R₄ eine hydrolysierbare Gruppe darstellen.

8. Zusammensetzung nach Anspruch 6, in welcher Z die Gruppe -CONH-(CH₂)ₙ-Si(OCH₃)₃, worin n 1 bis 10 ist, oder -[Si(OCH₃)₂-O]ₙ-Si(OCH₃)₃, worin n 0 bis 10 ist, darstellt.

9. Zusammensetzung nach Anspruch 6, in welcher das Silan-funktionelle Polymer ein Alkoxysilan-funktionelles Acryl-Polymer mit einem Gewichtsmittel des Molekulargewichts von 500 bis 30000 ist, welches etwa 30 bis 95 Gewichtsprozent, bezogen auf das Gewicht des Polymers, polymerisierte ethylenisch ungesättigte Monomere, die keine Alkoxysilan-Funktionalität enthalten, und etwa 5 bis 70 Gewichtsprozent ethylenisch ungesättigte Monomere, die eine Alkoxysilan-Funktionalität enthalten, umfaßt.

## Revendications

1. Composé qui est un produit d'addition d'un composé de vinyldioxo avec un composé difonctionnel ayant deux groupes fonctionnels réactifs, au moins l'un de ces groupes fonctionnels étant un groupe silyle, l'adduct étant représenté par la formule générale suivante : 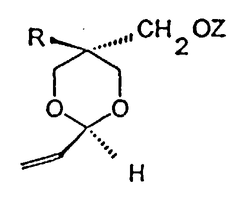 dans laquelle R représente alkyle ramifié, non ramifié ou cyclique ayant jusqu'à 12 atomes de carbone et Z est un radical divalent terminé par un groupe silyle.

2. Composé selon la revendication 1, dans lequel R représente méthyle ou éthyle.

3. Composé selon la revendication 1, dans lequel le groupe silyle représente Si(R₂)(R₃)(R₄), dans lequel R₂, R₃ et R₄ représentent indépendamment alkyle, phényle, éther alkylique ou éther phénylique, au moins deux des groupes R₂, R₃ et R₄ étant un groupe hydrolysable.

4. Composé selon la revendication 3, dans lequel deux des groupes R₂, R₃ et R₄ sont de l'éther alkylique, chaque alkyle étant choisi indépendamment dans le groupe constitué des hydrocarbures ramifiés, non

5. Composé selon la revendication 1, dans lequel Z est le groupe -CONH-(CH₂)ₙ-Si(OCH₃)₃ dans lequel n est égal à 1 jusqu'à 10, ou -[Si(OCH₃)₂-O]ₙ-Si(OCH₃)₃ dans lequel n est égal à 0 jusqu'à 10.

6. Composition de revêtement durcissable comprenant 10% à 80% en poids d'un véhicule organique liquide et 20% à 90% en poids, par rapport au poids de la composition, d'un liant qui comprend :
a) 5% à 50% en poids du liant d'un adduct selon la revendication 1,
b) 80% à 10% en poids du liant d'un polymère à fonctionnalité silane, et
c) une quantité efficace d'un catalyseur de durcissement.

7. Composition selon la revendication 6, dans laquelle le groupe silyle est Si(R₂)(R₃)(R₄), dans lequel R₂, R₃ et R₄ représentent indépendamment alkyle, phényle, éther alkylique ou éther phénylique, au moins deux des groupes R₂, R₃ et R₄ étant un groupe hydrolysable.

8. Composition selon la revendication 6, dans laquelle Z est le groupe -CONH-(CH₂)ₙ-Si(OCH₃)₃ dans lequel n est égal à 1 jusqu'à 10, ou -[Si(OCH₃)₂-O]ₙ-Si(OCH₃)₃ dans lequel n est égal à 0 jusqu'à 10.

9. Composition selon la revendication 6, dans laquelle le polymère à fonctionnalité silane est un polymère acrylique à fonctionnalité alkoxysilane d'un poids moléculaire moyen en poids de 500 à 30 000 comprenant environ 30% à 95% en poids, par rapport au poids du polymère, de monomères à insaturation éthylénique polymérisés, qui ne contiennent pas de fonctionnalité alkoxysilane et environ 5% à 70% en poids de monomères à insaturation éthylénique qui contiennent une fonctionnalité alkoxysilane.
